(19) Europäisches Patentamt
European Patent Office
Office européen des brevets

(11) **EP 2 731 985 B1**

(12) **FASCICULE DE BREVET EUROPEEN**

(45) Date de publication et mention de la délivrance du brevet:
**05.12.2018 Bulletin 2018/49**

(21) Numéro de dépôt: **12744090.7**

(22) Date de dépôt: **12.07.2012**

(51) Int Cl.:
*C08J 9/00* (2006.01)          *C08J 9/30* (2006.01)
*C04B 26/06* (2006.01)          *C04B 28/24* (2006.01)
*C04B 38/00* (2006.01)          *F16L 59/00* (2006.01)
*C04B 14/28* (2006.01)          *C04B 14/06* (2006.01)

(86) Numéro de dépôt international:
**PCT/FR2012/051661**

(87) Numéro de publication internationale:
**WO 2013/007957 (17.01.2013 Gazette 2013/03)**

(54) **MATERIAUX D'ISOLATION THERMIQUE HAUTES PERFORMANCES**

LEISTUNGSSTARKE WÄRMEDÄMMSTOFFE

HIGH-PERFORMANCE THERMAL INSULATION MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2011 FR 1156427**

(43) Date de publication de la demande:
**21.05.2014 Bulletin 2014/21**

(73) Titulaire: **Saint-Gobain Isover**
**92400 Courbevoie (FR)**

(72) Inventeurs:
• **GOLETTO, Valérie**
**94700 Maisons-Alfort (FR)**
• **LOUAPRE, David**
**MA 02466 Newton (US)**
• **PARNEIX, Caroline**
**F-92500 Rueil-Malmaison (FR)**

(74) Mandataire: **Saint-Gobain Recherche**
**Département Propriété Industrielle**
**39 Quai Lucien Lefranc**
**93300 Aubervilliers (FR)**

(56) Documents cités:
EP-A2- 1 892 226          WO-A1-00/01640
WO-A1-03/097227          WO-A1-2006/134080
WO-A1-2010/126792          WO-A1-2011/015751

## Description

La présente invention concerne un matériau d'isolation thermique haute performance, son procédé de fabrication, ainsi que son utilisation dans le domaine de la construction pour isoler les parois (extérieures ou intérieures) de bâtiments ou combler des interstices dans des matériaux (murs creux ou "cavity walls", canalisations, etc.), ce matériau isolant pouvant se présenter sous forme de panneaux, ou éventuellement sous forme de granulés, blocs, couches, projetés, moulés, etc.

Qu'il s'agisse du marché du neuf ou de la rénovation, la demande de produits d'isolation, en particulier thermique, performants, est toujours aussi importante. Outre des propriétés d'isolation accrues et le respect du cahier des charges des ouvrages du bâtiment, la demande pour des produits offrant plus de confort d'utilisation, de pérennité, d'économie de matière première, etc. dans une optique notamment de développement durable, est également croissante. Il est particulièrement avantageux, dans cette recherche de matériaux offrant une meilleure isolation thermique que lesdits matériaux présentent également, voire améliorent, d'autres propriétés recherchées dans la construction de bâtiments, notamment en matière d'allégement de charge, de résistance mécanique, d'isolation phonique, etc.

On connait actuellement une grande variété d'isolants thermiques. Parmi les produits les plus courants, on peut citer les isolants fibreux, à base de fibres naturelles ou synthétiques telles que la laine de verre ou la laine de roche, les isolants cellulaires du type polymère expansé tel que le polystyrène expansé ou extrudé, ou les mousses phénoliques ou de polyuréthane. Les performances thermiques des matériaux isolants essentiellement minéraux se traduisent par des valeurs de conductivité thermique À couramment supérieures à 35, en particulier de l'ordre de 40 mW/m.K, valeurs qui peuvent être plus basses dans le cas des isolants essentiellement organiques, par exemple dans le cas d'isolants cellulaires incorporant un gaz de plus faible conductivité thermique que l'air, pour améliorer les performances thermiques. Un inconvénient de ces matériaux toutefois est la difficulté de conserver le gaz au sein de la matrice au cours du temps, le matériau perdant en vieillissant une partie de ces performances thermiques. De surcroit, pour les isolants organiques, la réaction au feu est mauvaise du fait de leur nature.

On peut également avoir recours à des matériaux dans lesquels un vide a été effectué de façon à former par exemple des panneaux sous vide. Ces isolants sont difficiles à utiliser car ils ne peuvent être ni découpés, ni percés, et ils peuvent subir une perte progressive du vide sur des longues durées.

On peut également citer comme isolants les aérogels, généralement sous forme de granules translucides ou de poudre présentant des tailles de grains ou granules classiquement de l'ordre du mm, aérogels particulièrement performants en termes d'isolation thermique, mais dont les faibles propriétés mécaniques imposent de les utiliser avec des protections ou un agent de renforcement, ou les aérogels au sein de mats (ou nappes) formés de fibres enchevêtrées (mécaniquement résistantes) pour lesquels il peut être difficile de donner une forme déterminée. Ces aérogels (en particulier de silice) sont difficiles et coûteux à obtenir à l'échelle industrielle, ils nécessitent des conditions de séchages délicates et leur combinaison avec d'autres isolants pour obtenir une tenue mécanique ou une forme adéquate peut être complexe. Leur utilisation reste donc limitée.

Un matériau d'isolation thermique à base d'un aérogel est décrit dans le document WO 2010126792. Il existe par conséquent une forte demande pour développer des matériaux performants en termes d'isolation thermique, mais plus faciles et moins coûteux à fabriquer industriellement (en particulier produits à partir de matières premières abondantes) que les aérogels notamment. Outre ses bonnes performances thermiques (améliorées par rapport aux produits minéraux courants), il est souhaitable que le produit présente une bonne tenue (notamment au vieillissement, ou en terme de résistance mécanique ou autre: chimique, feu, etc.) sans alourdir sa charge. Il est également souhaitable qu'il reste facile à étaler lors de son durcissement et permette la réalisation de toutes les formes souhaitables, notamment par moulage (ou éventuellement par étalement ou projection d'une couche).

La présente invention atteint ce but et pallie ainsi aux inconvénients vus précédemment en proposant un nouveau matériau isolant thermique, en particulier (au moins) sous forme d'une mousse solide, ce matériau étant formé à partir de (ou fait à partir de, ou à base de, ou formé de) particules minérales, autres que des aérogels, de (ou possédant une) porosité sub- (ou sous-) micronique (c'est-à-dire comprenant des pores de diamètres inférieurs à 1 $\mu$m), ce matériau intégrant (ou comprenant ou combinant) deux gammes de porosités différentes (ou distinctes ou disjointes), dont une première gamme (dite de macroporosité dans la présente invention), constituée de pores (dits macropores) de diamètres (c'est-à-dire présentant une distribution de diamètres) compris entre 10 microns et 3 mm, en particulier compris entre quelques dizaines et quelques centaines de microns (et notamment entre 10 et 500 $\mu$m), et une seconde gamme (dite de porosité submicronique dans la présente invention) constituée de pores (dits submicroniques) de diamètres (c'est-à-dire présentant une distribution de diamètres) supérieurs à 4 nm, de préférence supérieurs à 5 nm, et inférieurs à 1 $\mu$m, le volume poreux desdits pores submicroniques étant d'au moins 0.5 cm$^3$/g (c'est-à-dire 0.5 cm$^3$ par gramme de matériau) et la masse volumique (apparente ou globale, c'est-à-dire mesurée sur l'ensemble du produit) du matériau isolant étant inférieure à 300 kg/m$^3$.

Le produit selon l'invention comprend ainsi deux porosités/deux types de pores (se différentiant significativement par leur taille (on observe en l'occurrence deux distributions de tailles de pores distinctes autour de deux pics distincts), qualifiée en l'occurrence par leur diamètre), les pores d'une catégorie (tels que les pores submicroniques) étant présents entre les pores d'une autre catégorie (tels que les macropores). De façon générale et avantageuse, seulement deux porosités/types de pores sont présents dans le produit, cependant il n'est pas exclu que le produit puisse comprendre plus de deux porosités/types de pores (notamment autour de pics de distribution distincts). Le diamètre permettant de qualifier les pores submicroniques est calculé, comme explicité par la suite, à partir des mesures de volumes poreux par porosimétrie à intrusion de mercure, à l'aide de l'équation de Washburn, le diamètre des macropores étant mesuré par microscope électronique à balayage (MEB) ou par tomographie X.

Le produit présente des pores (et est formé de particules présentant des pores) submicroniques de diamètres supérieurs à 4 nm, généralement supérieurs à 5 nm, notamment supérieurs à 7 nm et en particulier supérieurs à 10 nm, et inférieurs à 1 $\mu$m (les diamètres variant dans ces limites selon les particules minérales initiales utilisées, notamment selon leur nature et leur surface spécifique, la distribution de diamètres pouvant en outre être plus ou moins étroite ou resserrée autour d'un pic). Comme indiqué précédemment, les macropores sont de diamètres (c'est-à-dire présentent une distribution de diamètres) entre 10 microns et 3 mm, avantageusement supérieurs à 50 $\mu$m voire supérieurs à 100 $\mu$m, et avantageusement inférieurs à 500 $\mu$m, voire inférieurs à 300 $\mu$m.

Avantageusement, les particules minérales précitées sont à base d'oxydes (di ou tétra) de silicium et/ou de leurs dérivés (sels, esters), en particulier intégrant des métaux alcalino-terreux (Ca, Mg) ou non (Al), notamment ces particules sont (d'au moins l'un des matériaux suivants ou de type suivant): de la silice, un silicate (en particulier silicate de métal alcalin ou de métal alcalino-terreux, et de préférence renfermant du calcium et/ou du magnésium), et/ou une argile, et/ou les particules minérales précitées sont à base de dolomites (de formule générale $AB(CO_3)_2$ dans laquelle A peut être un atome de calcium, de baryum et/ou de strontium, et B peut être le fer, le magnésium, le zinc et/ou le manganèse) et/ou carbonates, en particulier calco-magnésiens (à base de calcium et/ou de magnésium),comme décrit plus en détail ultérieurement.

De préférence, le volume poreux pour les pores submicroniques varie de 0.5 à 3 cm$^3$/g, notamment entre 0.5 et 3 cm$^3$/g, et le volume poreux pour les macropores est supérieur à 1 cm$^3$/g (c'est-à-dire 1 cm$^3$ par gramme de matériau), de préférence supérieur à 3 cm$^3$/g, et en particulier varie de 5 à 15 cm$^3$/g. Le volume poreux pour les pores submicroniques ($V_{sm}$) est déterminé par porosimétrie à mercure réalisée sur des appareils de référence Pascal 140 et Pascal 440 commercialisés par la société Thermo Scientific, et est considéré comme étant égal au volume cumulé de mercure introduit dans les pores pour des pressions de mercure supérieures à 1.47 MPa (pression calculée par l'équation de Washburn -Washburn, 1921- pour un diamètre de pore de 1 micron) et allant notamment jusqu'à 400 MPa avec les appareils précités, les pores étant supposés cylindriques, en supposant la tension de surface du mercure égale à 480 dynes/cm et l'angle de contact particules minérales/mercure égal à 140°, le volume poreux étant donné en cm$^3$ par gramme de matériau. Le volume poreux des macropores ($V_m$) est déterminé par la formule:

$$V_m = 1/ \rho_a - 1/ \rho_s - V_{sm}$$

$\rho_a$ étant la masse volumique apparente du produit (correspondant au rapport de sa masse sur son volume), 1/$\rho_a$ étant le volume spécifique du matériau, $\rho_s$ étant la masse volumique du squelette (partie du produit occupée par de la matière dense/sans pores), (majoritairement) minéral, mesurée par pycnomètre à hélium (norme ASTM C604- "standard test method for true specific gravity of refractory materials by gas-comparison pycnometer", $\rho_s$ étant par exemple de l'ordre de 2000 kg/m$^3$ pour la silice, la masse volumique pouvant donc être divisée par un facteur de l'ordre de 10 entre la masse volumique initiale des particules et celle du matériau final, cet allégement résultant notamment du moussage et de l'air introduit à cet effet à un taux d'au moins 65% en volume pour obtenir le produit selon l'invention)), et 1/ $\rho_s$ étant le volume spécifique du squelette.

Le volume poreux total ($V_p= V_m + V_{sm}$) du matériau isolant thermique selon l'invention est avantageusement supérieur à 1.5 cm$^3$/g, et préférentiellement compris entre 5.5 et 18 cm$^3$/g.

Le matériau isolant thermique selon l'invention se présente sous forme d'une mousse solide (généralement rigide) de (ou à base de) particules minérales poreuses, autres que des aérogels et est en particulier obtenu à partir du mélange d'au moins les éléments suivants : une mousse aqueuse ou de l'eau, des particules minérales de porosité submicronique (celle(s) mentionnée(s) dans la définition précédente de l'invention), généralement incorporées à la mousse ou à l'eau sous forme d'une dispersion/suspension, lesdites particules présentant (initialement, telles qu'introduites dans le mélange) une surface spécifique S supérieure à 5 m$^2$/g (la surface spécifique étant donnée en m$^2$ par gramme de particule(s)), le mélange pouvant comprendre en outre le cas échéant un liant organique et/ou un liant minéral, et/ou un tensioactif, et/ou un agent porogène, et/ou des fibres (ou renforts), etc, comme explicité ultérieurement.

L'invention concerne une mousse (solide, par opposition à la "mousse aqueuse" utilisée pour l'obtenir) destinée à l'isolation thermique, cette mousse (formant le produit précité selon l'invention) étant formée de particules minérales poreuses, autres que des aérogels (cette mousse étant qualifiée de 'mousse de particules minérales'), et intégrant deux gammes de porosités différentes, une première gamme de (macro)pores de diamètres compris entre 10 microns et 3 millimètres, et une seconde gamme de pores submicroniques de diamètres supérieurs à 4 nm et inférieurs à 1 micron et dont le volume poreux est d'au moins 0.5 cm$^3$/g, la densité apparente de la mousse étant inférieure à 300 kg/m$^3$ .

La création de cette porosité submicronique (ou volume poreux à l'échelle sub-micronique) emprisonnant de l'air dans une structure (une mousse) présentant déjà des (macro)pores (cette macroporosité provenant de la mousse aqueuse et correspondant aux bulles d'air introduites, la taille des bulles et macropores sensiblement sphériques résultants étant relativement régulière, avec une distribution de diamètres plus ou moins étroite ou resserrée en particulier entre 50 $\mu$m et 500 $\mu$m , comme déjà évoqué), et dans les zones (ou "murs") entre lesdits (macro)pores, améliore les performances thermiques du produit, tout en donnant un produit comparativement plus léger du fait de la présence de ces pores supplémentaires, cette porosité supplémentaire dans les murs de la mousse étant apportée notamment par la porosité intra particulaire (initialement présente dans les particules utilisées et résultant généralement de leur synthèse), et résultant également de l'empilement de ces particules poreuses pour constituer les murs de la mousse. Les mousses ainsi obtenues selon l'invention présentent des propriétés d'isolation thermique améliorées par rapport à des mousses inorganiques plus classiques de même densité, ou par rapport à des isolants cellulaires organiques courants de type polystyrène, tout en étant (plus) économiques et restant légers, et tout en présentant une meilleure résistance au vieillissement et au feu que des produits organiques aux performances d'isolation thermiques équivalentes. Lesdits matériaux/mousses sont compatibles aussi bien pour une utilisation comme matériau de comblement, que pour une utilisation en surface, notamment en façade.

Les performances thermiques de l'isolant selon l'invention se traduisent par des valeurs de conductivité thermique À (globale) inférieures à 40 mW/m.K, notamment comprises entre 20 et 40 mW/m.K environ, en particulier inférieures à 35 mW/m.K environ, et de préférence inférieures à 30 mW/m.K environ, descendant notamment jusqu'à 25 mW/m.K, voire encore moins (les performances thermiques étant d'autant meilleures que la conductivité thermique est basse). La conductivité thermique À (en W/m.K) représente la quantité de chaleur passant au travers de l'isolant (d'un mètre d'épaisseur, par m$^2$ et lorsque la différence de température entre les deux faces est de 1°K). Les valeurs de conductivité thermique À (comparées à pression et température identiques, en particulier à pression atmosphérique (1 bar) et température ambiante, sont mesurées dans le cadre de l'invention avec un fluxmètre de la série HFM 436 de la société NETZSCH™ en suivant les protocoles établis par les normes ASTM C518 et ISO 8301. La température de caractérisation est de l'ordre de 25 °C, et les mesures sont effectuées à pression atmosphérique, la précision des mesures étant estimée à 5%.

A titre comparatif, le gain de performance en matière de conductivité thermique pour le produit selon l'invention peut être d'au moins 20 ou 25% (de moins en conductivité thermique) par rapport à une mousse solide similaire (minérale et de même densité) mais obtenue sans les particules poreuses et ne présentant pas la double porosité (mais uniquement les macropores), par exemple par rapport à une mousse de verre obtenue notamment à partir de verre que l'on fait fondre puis que l'on introduit dans un four de moussage, comme illustré ultérieurement dans les exemples comparatifs.

Le produit selon l'invention est également beaucoup plus facile d'obtention que les aérogels (lesquels de par leur caractère hydrophobe ne permettent pas notamment d'obtenir véritablement de mousse et n'engendrent pas de double porosité telle que définie selon l'invention), obtenus en partant de précurseurs/matières premières et en opérant une réaction chimique pour former la substance minérale les formant (tandis que, dans le cas du produit selon l'invention, la substance minérale employée - les particules minérales (autres que des aérogels donc)- est déjà formée et simplement mise en forme sans recourir à des traitements visant à les dégrader (broyage, etc) ou à modifier leur composition chimique, comme il apparait dans le procédé selon l'invention explicité par la suite). La structure poreuse du produit selon l'invention et/ou ledit produit est ainsi avantageusement formée sans réaction chimique ni altération comme précitées. La même observation peut être faite en comparaison de structures ou mousses méso- ou nanoporeuses existants dans d'autres domaines ou applications (par exemple utilisées pour des tamis moléculaires et obtenues par exemple par voie sol-gel à partir de précurseurs), qui, de spécificités et de contraintes différentes, résultent usuellement de réactions chimiques ou d'opérations mécaniques de dégradation. Le produit selon l'invention est obtenu par un procédé plus simple et économique de mise en oeuvre.

La masse volumique apparente du matériau (ou produit ou mousse) selon l'invention est inférieure à 300kg/m$^3$, et dépend de la formulation (quantité d'eau, nature et taux d'additifs, du pH...) ainsi que des conditions de moussage (temps de moussage, vitesse d'agitation, géométrie de cuve et pale). La masse volumique est déterminée en faisant le rapport de la masse d'un volume donné du matériau, sur ledit volume. De préférence, la masse volumique du matériau isolant selon l'invention est inférieure ou égale à 200 kg/m$^3$, en particulier inférieure à 130 kg/m$^3$, avantageusement inférieure à 120 kg/m$^3$, voire inférieure à 100 kg/m$^3$, et même inférieure à 80 kg/m$^3$.

Le matériau selon l'invention est majoritairement (à au moins 80% en poids, voire 90%), voire uniquement, minéral/inorganique (les matières organiques éventuellement présentes pouvant être le cas échéant un liant organique, un greffage organique, etc.), ce qui permet d'assurer notamment une bonne tenue au feu. Le matériau est en outre essentiellement (à au moins 80% en poids, voire 90%), formé des particules minérales précitées dans une structure de mousse. Ces particules minérales peuvent présenter différentes formes (arrondies, étoiles, plaquettes, etc.), sont solides et poreuses, sont formées de molécules inorganiques, notamment à base d'oxyde(s), et sont utilisées directement pour former le produit sans modification de leur formule.

Les particules minérales sont généralement (initialement) sous forme d'une poudre, dont la granulométrie varie avantageusement de 1 $\mu$m à 500 $\mu$m de diamètre médian D50, ce diamètre étant mesuré par analyse granulométrique par diffraction laser selon la norme ISO 13320-1 : 2000 notamment, la poudre étant le cas échéant mise en dispersion, notamment dans l'eau (de l'huile notamment pouvant également être ajoutée, par exemple pour un effet tensioactif et de consolidation, et/ou un liant notamment), et utilisée (ou incorporée) sous forme de ladite dispersion pour former le produit selon l'invention. De préférence la taille des particules (D50) est inférieure à 100 $\mu$m, en particulier inférieure à 10 $\mu$m.

La surface spécifique initiale S de ces particules minérales est supérieure à 5 m$^2$/g, en particulier supérieure à 10 m$^2$/g, et avantageusement supérieure à 20 m$^2$/g, plus particulièrement supérieure à 30 m$^2$/g, notamment supérieure à 50 m$^2$/g. Avantageusement, elle est même supérieure à 60 m$^2$/g, de préférence supérieure à 70 m$^2$/g, plus avantageusement supérieure à 80 m$^2$/g, et de manière encore plus préférée supérieure à 90 m$^2$/g, voire même à 100 m$^2$/g. De préférence également (ces particules étant généralement et avantageusement hydrophiles pour pouvoir être dispersées dans l'eau sans ajout de composant ou tensioactif à cet effet), elle est inférieure à 500 m$^2$/g, en particulier inférieure à 300 m$^2$/g, notamment inférieure à 250 m$^2$/g (pour éviter une dégradation des performances thermiques du fait dudit caractère hydrophile).

Les surfaces spécifiques, exprimées en m$^2$/g, sont mesurées par adsorption d'azote (théorie de l'adsorption multiple des gaz à l'aide de déterminations de Brunauer, Emmett et Teller- méthode BET) conformément à la norme ISO 9277 : 2010.

De préférence, la substance minérale formant les particules minérales est choisie parmi au moins l'une des substances suivantes : au moins une silice, en particulier amorphe, telle qu'une silice précipitée, une silice pyrogénée, une fumée de silice, au moins un carbonate (en particulier du carbonate de calcium ou carbonate de magnésium, ce carbonate étant généralement un carbonate de synthèse), au moins un silicate (en particulier silicate de calcium), et/ou au moins une argile.

Dans un premier mode de réalisation de l'invention, les particules minérales sont choisies parmi les silicates et/ou les carbonates, en particulier les silicates et/ou les carbonates de métal alcalin ou de métal alcalino-terreux, et de préférence choisis dans les composés calco-magnésiens, tels que des silicates et/ou des carbonates de calcium et/ou de magnésium. Les pores submicroniques dans le produit selon l'invention formé à partir de telles particules présentent en particulier un diamètre compris entre 10 nm et 1 $\mu$m (c'est-à-dire que chaque pore de cette catégorie présente un diamètre compris dans cette gamme, la distribution de l'ensemble des diamètres de ces pores étant plus ou moins étroite ou resserrée) en particulier entre 100 nm et 1 $\mu$m, notamment entre 500 nm et 1 $\mu$m.

Dans un second mode de réalisation de l'invention, les particules minérales sont des particules de silice, le matériau d'isolation thermique selon l'invention étant alors une mousse de silice. De préférence, c'est une silice amorphe (incorporée notamment sous forme d'une poudre de silice). Les pores submicroniques dans le produit selon l'invention formé à partir de telles particules présentent en particulier un diamètre inférieur à 300 nm.

Il est également possible le cas échéant de combiner plusieurs types de particules minérales poreuses (par exemple d'utiliser conjointement des particules de silice et des particules de carbonates pour former le produit selon l'invention).

Outre les particules minérales, le matériau selon l'invention est formé à partir d'eau ou phase aqueuse (la présence d'un autre médium également, par exemple de l'huile et/ou un alcool, notamment du glycérol, n'étant pas exclue), médium(s) dans le(s)quel(s) se trouvent ou sont incorporées les particules minérales, et que l'on fait mousser (méthode dite de 'moussage direct' selon l'invention), et/ou est formé d'une mousse aqueuse déjà formée, dans laquelle on rajoute les particules (notamment sous forme de dispersion, généralement aqueuse) (méthode dite 'd'incorporation' selon l'invention). Par « mousse aqueuse », on entend tout type de mousse obtenue par un empilement désordonné de bulles de gaz dans une phase aqueuse. Ce liquide d'aspect savonneux ou la phase aqueuse de départ non encore moussée dans laquelle se trouvent les particules avant moussage, comprennent généralement au moins un composé tensioactif.

Comme tensioactif (ou agent moussant), on peut utiliser, en particulier avec les particules minérales de type carbonate, silicate, argile ou silice, au moins un (sel de) tensioactif anionique, en particulier sélectionné parmi l'un des composés suivants de formule générale : R-X$^-$, Y$^+$, pour lequel R est une chaîne aliphatique de 10 à 24 atomes de carbones, X$^-$ est un groupement portant une charge négative (groupement carboxylate, sulfate, sulfonate, etc.), et Y$^+$ est un contre cation sélectionné parmi les groupements ammonium, sodium et potassium, par exemple des sels de carboxylates comportant 12 à 24 atomes de carbone, sélectionnés notamment parmi les sels de myristate, de palmitate, de stéarate, d'oléate, ou de la base conjuguée de l'acide béhénique, ou des carboxylates issus du traitement des acides gras du suif, ou encore d'autres bases conjuguées d'acides gras comme par exemple les savons/gels douche comprenant des acides gras issus de sources naturelles telles que le suif, l'huile de coco, etc, par exemple des tensioactifs tels que le stéarate d'ammonium, etc.

Selon les substances minérales utilisées (par exemple dans le cas des carbonates), on peut également ou alternativement utiliser au moins un sel de tensioactif cationique sélectionné par exemple parmi les sels d'alkyltriméthyle ammonium contenant un groupement alkyle comportant 10 à 22 atomes de carbone, en particulier parmi au moins l'un des composés suivants : le bromure (ou chlorure) de dodécyltriméthylammonium, le bromure (ou chlorure) de tetradecyltriméthylammonium, le bromure (ou chlorure) d'hexadecyltriméthylammonium, le bromure (ou chlorure) d'octadécyltriméthylammonium, le bromure (ou chlorure) de cétyltriméthylammonium, le chlorure de cétylbenzyldimethylammonium, le bromure de cétyltriéthylammonium, le chlorure de tallowtriméthylammonium, etc.

Dans le cas de l'utilisation d'un tensioactif anionique et d'un tensioactif cationique conjointement, la préparation d'une mousse aqueuse peut être fait par exemple comme décrit dans la demande WO96/25475 ou à partir des kits bicomposants commercialisés par la société Allied Foam (référencés par exemple : 425A et 510B), constitués d'un premier mélange aqueux contenant un tensioactif anionique et d'un second mélange aqueux comprenant un tensioactif cationique et un latex, etc.

On peut également utiliser comme tensioactif(s) un ou plusieurs zwittérions. Parmi les zwittérions, on peut notamment citer des acides aminés ou dérivés, des molécules synthétisées à partir d'acides aminés, etc.

Généralement, le mélange (pour l'obtention du matériau isolant ou le mélange de particules) ou la (phase aqueuse donnant la) mousse aqueuse comprend moins de 5%, avantageusement moins de 2%, voire même moins de 1% de tensioactif de préférence anionique, et/ou de zwittérion(s).

On peut également, notamment conjointement à l'utilisation d'un agent tensioactif, utiliser un agent porogène dans le mélange. Le terme « porogène » dans la présente invention désigne toute substance apte à générer de la porosité au sein d'un matériau à l'aide d'un traitement ultérieur à l'insertion de cet agent dans le matériau pour éliminer ledit agent au moins partiellement. L'ajout d'agents porogènes permet le cas échéant une augmentation supplémentaire du volume poreux. Les agrégats de substance minérale viennent se structurer autour des agents porogènes, la suppression desdits agents entraînant la formation de la porosité de manière contrôlée.

Le ratio pondéral de la substance minérale par rapport à l'agent porogène est par exemple de 0.2 à 3, notamment de 0.7 à 2.5. Au moins 10% (en poids), notamment au moins 30%, en particulier au moins 50%, et de préférence au moins 90%, de l'agent porogène est supprimé, par exemple par calcination ou lavage, lors de la fabrication du produit isolant (en particulier après formation de la mousse rigide).

Avantageusement, l'agent porogène est formé d'un matériau dont la température de calcination est inférieure à la température de fusion et/ou de frittage de la substance minérale dans laquelle il est enfermé. Dans le cas des silices précipitées, la température de calcination du porogène doit par exemple être inférieure à 700°C.

L'agent porogène est par exemple à base/sous forme de particules, généralement sphériques, d'au moins un matériau organique, par exemple un polymère, notamment sous forme colloïdale. Il peut être par exemple au moins une particule organique, constituée de (co)polymères à blocs amphiphiles ou stéréoréguliers comprenant des blocs AB ou ABA (A représentant un bloc hydrophile comme l'oxyde de polyéthylène ou l'acide polyacrylique et B un bloc hydrophobe tel que le polystyrène, l'oxyde de polypropylène, le polyisoprène, ou la polyvinylpyridine). Il peut s'agir aussi de particules d'amidon et/ou de sels inorganiques, du type NaCl (incorporés dans le mélange aqueux contenant le cas échéant un co-solvant, tel que l'éthanol, les sels inorganiques étant éliminés par la suite par lavage). De préférence, il s'agit de particule(s) de latex et/ou de dispersion colloïdale de polymère(s) et/ou de particule(s) constituée(s) de macromolécule(s), choisie(s) parmi celle(s) donnant plutôt des sphères. Le latex peut comprendre notamment: un (co)polymère de type vinylique, avantageusement de type acrylique et/ou dérivé d'acide carboxylique, un copolymère de chlorure de vinyle et d'oléfine, silanisé ou non, etc. Il peut s'agir d'un latex commercial tel que le polyuréthane Baybond XP 2602 commercialisé par la Société Bayer, d'un latex sous forme de cire de polyéthylène oxydée ou non, éventuellement avec un copolymère acrylique (tels ceux commercialisés par Rohm and Haas et de la société Dow Chemical), d'un copolymère styrène-acrylique ou tout acrylique obtenu par polymérisation radicalaire en émulsion ou dispersion (ceux commercialisés par la société BASF dans la gamme Acronal®), etc. De préférence, il s'agit d'au moins un copolymère acrylique hydrodispersible (tel ceux commercialisés sous la référence Neocryl® par la société DSM, tel que le Neocryl® XK-52, le Neocryl® BT 21 ou le Neocryl® BT 100). Le(s) latex utilisé(s) comme porogène(s) ont avantageusement une température de transition vitreuse Tg supérieure à 50°C, notamment entre 50 et 200°C, en particulier entre 70 et 170°C.

Les porogènes peuvent être utilisés en émulsion ou dispersion, leur taux massique étant par exemple compris entre 5 et 75%, notamment entre 20 et 60%, voire entre 30 et 50% en poids total de l'émulsion ou de la dispersion.

Le mélange (pour l'obtention du matériau isolant/de la mousse ou le mélange de particules) peut également comprendre au moins un liant, organique et/ou minéral, utilisé, par exemple, pour permettre la liaison des particules entre elles et/ou la liaison des particules au reste de la structure du matériau.

Le liant peut être avantageusement un latex (notamment choisi cette fois parmi ceux ayant tendance à former des films, ce liant permettant notamment de renforcer la mousse), en particulier une émulsion ou dispersion aqueuse d'une ou plusieurs substances polymères naturelles ou synthétiques, généralement thermoplastiques. Ce liant latex a préférentiellement une température de transition vitreuse Tg inférieure à 50°C, en particulier entre -50°C et 25°C, de préférence entre -20°C et 10°C, avantageusement entre -10°C et 0°C, et a préférentiellement une température de filmification inférieure à la température ambiante, en vue d'obtenir la tenue recherchée pour les matériaux isolants à appliquer sur un support dans le domaine de la construction de bâtiments notamment. Le latex peut renfermer un (co)polymère de type vinylique (par exemple à base d'acétate de vinyle, en particulier d'homopolymère de polyacétate de vinyle, ou de copolymère d'acétate de vinyle et d'acide et/ou ester (méth)acrylique, maléïque, d'oléfine et/ou de chlorure de vinyle, ou à base de copolymère chlorure de vinyle/éthylène), ou de type acrylique (notamment un copolymère acrylonitrile/ester acrylique, ou styrène/acide ou ester acrylique silanisé et/ou dérivé d'acide carboxylique). Le latex peut notamment être un copolymère styrène-acrylique ou tout acrylique. Ces latex sont par exemple ceux commercialisés par la société BASF dans la gamme référencée par la dénomination Acronal®, en particulier l'Acronal® S 400.

On peut également ajouter d'autres additifs (notamment dans le mélange de particules ou le mélange utilisé pour obtenir la mousse/le produit selon l'invention ou dans la mousse, aqueuse ou de particules), comme des agents rhéologiques (plastifiant, tel que la glycérine, etc.), des agents de surface, des agents réducteurs d'eau (tels que la gélatine ou la glycérine, etc.), des opacifiants (par exemple de l'aluminium ou du graphite comme opacifiant infra rouge), des charges minérales, ou d'autres matériaux renforçant le tenue mécanique (fibres de verre ou organiques, silicate, gypse, ciment, liants organiques de type latex comme explicité précédemment, etc., ou limitant la contraction de la mousse ou la disproportion des bulles et réduisant leur taille (le moussage étant par exemple opéré sous atmosphère de perfluorohexane), etc,

Notamment, le matériau isolant thermique selon l'invention peut être préparé à partir d'au moins les éléments suivants, dans les quantités exprimées en pourcentage pondéral par rapport à la masse totale du mélange : de 40 à 95 % d'eau, de 5 à 60 % de particules minérales et de 0 à 15 % d'additif(s) (liant, opacifiant, agent hydrophobant, tensioactif, porogène, etc.).

La présente invention rend ainsi possible la fabrication d'une grande variété de matériaux hautement isolants à base de différentes particules minérales et le cas échéant de différents additifs, pour couvrir un large éventail des applications isolation notamment dans le domaine du bâtiment.

L'invention a également pour objet un procédé de fabrication du matériau isolant thermique décrit précédemment, comprenant les étapes suivantes :

- au moins une étape de préparation d'un mélange (ou ensemble), généralement aqueux (dispersion, en particulier suspension dans l'eau), de particules minérales de surface spécifique S supérieure à 5 $m^2/g$, et possédant un volume poreux d'au moins 0.5 $cm^3/g$ dans la gamme de porosité comprise entre 4 nm et 1 micron ;
- au moins une étape de réalisation d'une mousse (aqueuse (ou humide)) incluant lesdites particules (à partir du mélange de particules précité et/ou par incorporation dudit mélange de particules dans une mousse aqueuse formée séparément)
- au moins une étape de mise en forme (généralement pour former un monolithe et/ou une couche), notamment par moulage ou coulage ou projection (sur une surface ou paroi) de cette mousse ;
- au moins une étape de séchage (en laissant sécher ou en séchant) au moins partiel de la mousse ou du matériau ainsi obtenu.

Plusieurs méthodes peuvent être utilisées pour la réalisation de la mousse aqueuse comprenant les particules/le mélange aqueux de particules, par exemple :

- par moussage direct : c'est-à-dire par l'introduction d'un gaz dans le mélange de particules par diverses méthodes telles que : l'agitation mécanique, le bullage d'un gaz, par exemple à travers un fritté (plaque poreuse à travers laquelle on fait passer le gaz pour générer la mousse), le bullage in-situ d'un gaz dissous (par exemple du pentane) ou d'un gaz par réaction chimique, notamment par décomposition (par exemple du peroxyde d'hydrogène en eau et dioxygène), etc, et/ou
- par incorporation: c'est-à-dire l'incorporation du mélange de particules dans une mousse aqueuse déjà préformée (ou inversement l'incorporation de la mousse préformée au mélange de particules), ladite mousse étant par exemple préparée par moussage à l'aide d'une dispersion (généralement aqueuse) dans laquelle on introduit un gaz par l'une des méthodes ci-dessus,

le moussage même se faisant généralement en présence d'au moins un tensioactif (ajouté dans le mélange de particules dans le cas du moussage direct, ou le tensioactif étant présent dans la dispersion que l'on fait mousser pour former la mousse aqueuse dans le cas de l'incorporation).

On peut en outre ajouter dans le mélange de particules et/ou dans la mousse aqueuse différents additifs comme des agents porogènes, des liants organiques ou inorganiques, des agents rhéologiques (plastifiant), des agents de surface, etc.

L'étape de mise en forme peut comprendre des opérations de coulée ou moulage de la mousse comprenant les particules dans des cavités de forme ou section appropriée(s) ou de projection de la mousse sur une surface ou paroi. Le terme moulage est à prendre au sens large et recouvre toute forme de conformation, telles que la coulée en moule ouvert, l'extrusion à travers une filière et découpe de l'extrudât, etc, le séchage étant généralement consécutif à la mise en forme.

Le procédé selon l'invention peut également inclure le cas échéant, après le séchage :

- éventuellement au moins une étape de traitement thermique permettant la consolidation du matériau et /ou l'élimination le cas échéant de l'agent porogène.
- éventuellement au moins une étape d'hydrophobation du matériau obtenu.

Le matériau isolant thermique obtenu est solide (et généralement rigide) et multi- (en particulier bi-) poreux. Il est généralement (conçu) sous forme d'un panneau dont l'épaisseur est au moins égale à 5 mm. Il peut aussi être obtenu sous forme d'au moins une couche appliquée par exemple sur une plaque de plâtre), ou le matériau à l'état encore humide peut être imprégné ou étalé sur un voile (par exemple non tissé...), ou le matériau peut être associé à une matrice de fibres ou autre couche, etc.

La présente invention concerne également l'utilisation du matériau isolant/de la mousse selon l'invention dans le domaine de la construction, pour isoler notamment des parois de bâtiments.

La présente invention et ses avantages seront mieux compris à la lecture des exemples décrits ci-après, à titre illustratif et non limitatif:

Exemple 1:

Dans cet exemple, on a fabriqué une mousse de carbonate de calcium comme suit :
On a dispersé dans 25g d'eau 6.25 g d'un carbonate de calcium commercialisé par la société Solvay sous la référence Socal 31 à l'aide d'une pale IKA (agitateur à hélice), puis on a ajouté à cette dispersion 1.11 g d'un latex (liant organique) commercialisé par la société BASF sous la référence Acronal S400. On a homogénéisé le mélange à l'aide d'une pale IKA à la vitesse de 200 tr/min.

Dans un second récipient, on a préparé une mousse aqueuse à partir de deux solutions de tensioactifs commercialisées par la société Allied Foam sous les références AFT 425 A et AFT 510B et composées comme suit :

- référence AFT 425A constituée de (pourcentages pondéraux):

    - Mélange de tensioactifs cationiques appartenant à la classe des alkyls à longues chaîne :

50-60%
    - Mélange de tensioactifs phénoxyle non ionique : 10-20%
    - Ethanol : 5-8%
    - Eau : 12-35%

- référence AFT 510B constituée de:

    - Mélange de polymères acrylique : 25-35%
    - Mélange de tensioactifs anioniques appartenant à la classe des acides gras : 15-30%
    - Eau : 35-60%

On a prélevé 10g de AFT425A auxquels on a ajouté 100g d'eau. On a fait mousser le mélange par action mécanique à l'aide d'un robot ménager de la marque Kenwood pendant 3 min à vitesse maximale. On a ajouté ensuite sous agitation en environ 1min 20 g de la solution AFT 510 B et on a mélangé l'ensemble pendant 2 min 30 à vitesse maximale à l'aide du robot ménager.

Pour préparer la mousse de carbonate, on a prélevé 1.5g de la mousse liquide résultante que l'on a introduit à la spatule dans la dispersion aqueuse à base de carbonate de calcium et d'Acronal S400. On a homogénéisé l'ensemble à l'aide de la pale IKA à la vitesse de 200 tr/min.

La mousse humide a ensuite été coulée dans un moule en téflon et placée à l'étuve à 40°C pendant 48 heures.

Le produit selon l'invention obtenu, présentant les deux gammes de porosités selon l'invention (en particulier des macropores de diamètres compris entre 10 $\mu$m et 3 mm, et des pores submicroniques de diamètres supérieurs à 4 nm et inférieurs à 1 micron) et renfermant plus de 65% d'air en volume, a été caractérisé selon les méthodes mentionnées plus avant dans le texte, les valeurs obtenues étant les suivantes :

- Masse volumique : 127 kg/m$^3$;
- Volume poreux des macropores de diamètres compris entre 10 microns et 3mm : au moins 5.15 cm$^3$/g;
- Volume poreux des pores submicroniques de diamètres compris entre 4 nm et 1 $\mu$m : 0.84 cm$^3$/g;
- Conductivité thermique : 33.7 mW/m.K +/-10%.

Les valeurs indiquées montrent que le matériau inorganique isolant thermique obtenu présentait une faible masse volumique en même temps qu'une porosité importante avec deux types de porosités, dont des pores présentant un diamètre compris entre 4 nm et 1 micron, et présentait des performances thermiques particulièrement avantageuses.

Exemple 2:

Dans cet exemple, on à fabriqué une mousse de silice comme suit :
On a dispersé dans l'eau de la silice précipitée commercialisée par la société Rhodia sous la référence Tixosil T365 (de diamètre médian D50 de l'ordre de 3.5 microns et de surface spécifique de l'ordre de 130 m$^2$/g), puis on a ajouté à cette dispersion un tensio-actif anionique ammonium polyacrylate commercialisé par la société Zschimmer and Schwartz sous la référence Schäumungsmittel W53FL, des agents rétenteurs d'eau (dans le présent exemple : gélatine et glycérine, la glycérine jouant également le rôle de plastifiant) et un liant minéral (ici du silicate de sodium) avant d'agiter mécaniquement à l'aide d'un mélangeur de sorte que le volume de la mousse humide ainsi obtenue soit égal à environ 3 fois le volume initial de la dispersion non moussée.

La composition du mélange était la suivante (exprimée en pourcentages pondéraux) : eau : 73,4%; silice précipitée : 18,2%; silicate de sodium 2.7%; gélatine : 3,2% glycérine 0,5% et agent tensioactif : 1,9%.

La mousse humide de silice a ensuite été coulée dans un moule en téflon et placée à l'étuve à une température inférieure à 25°C et à 80% d'humidité relative pendant 3 jours. Une fois séchée, la mousse ou pâte, ayant subi une perte de masse d'environ 80 %, a durci, se présentant sous la forme d'un solide. Le monolithe a ensuite été placé dans une enceinte fermée contenant de l'hexaméthyldisilazane (HMDS) en tant qu'agent hydrophobe (ce composé étant commercialisé sous la référence 52619 de la marque Fluka par la société Sigma - Aldrich) pendant 4 heures à 80°C.

Le produit obtenu, présentant les deux gammes de porosités selon l'invention (en particulier des macropores de diamètres compris entre 10 μm et 3 mm, et des pores submicroniques de diamètres supérieurs à 4 nm et inférieurs à 1 micron) et renfermant plus de 65% d'air en volume a ensuite été caractérisé selon les méthodes mentionnées plus avant dans le texte, les valeurs obtenues étant les suivantes :

- Masse volumique : 200 kg/m$^3$;
- Volume poreux des macropores de diamètres compris entre 10 microns et 3 mm: au moins 3.3 cm$^3$/g;
- Volume poreux des pores submicroniques de diamètres compris entre 4 nm et 1 μm : 1.25 cm$^3$/g;
- Conductivité thermique : 36 mW/m.K.

La précision des mesures était estimée à 5%.
Les valeurs indiquées montrent que le matériau inorganique isolant thermique obtenu présentait une faible masse volumique en même temps qu'une porosité importante avec deux types de porosités, dont des pores présentant un diamètre compris entre 4 nm et 1 micron, et présentait des performances thermiques avantageuses.

Exemple comparatif

Dans cet exemple, on a mesuré les caractéristiques d'une mousse de verre commercialisée sous la référence FoamGlas S3 par la société Foamglas building. Cette mousse est purement minérale et présente des masses volumiques de même ordre que celles des produits selon l'invention. Cependant, à la différence des produits selon l'invention, elle ne présente qu'une seule gamme de porosité (macropores de diamètres supérieurs à 10 μm). Les valeurs obtenues étaient les suivantes :

- Masse volumique : 130 kg/m$^3$;
- Volume poreux des macropores de diamètres supérieurs à 10 microns : 7.2 cm$^3$/g;
- Conductivité thermique : 45 mW/m.K.

La précision des mesures était estimée à 5%.
On a observé qu'à masse volumique équivalente, les propriétés d'isolation thermique du produit selon l'invention sont bien meilleures que celles d'une mousse 'monoporeuse' telle que dans le présent exemple (voir en comparaison de l'exemple 1 selon l'invention).

Les produits selon l'invention sont particulièrement appropriés pour l'isolation thermique en particulier dans le domaine de la construction pour isoler les parois (extérieures ou intérieures) de bâtiments.

**Revendications**

1. Matériau isolant thermique, en particulier sous forme d'une mousse solide, formé à partir de particules minérales, autres que des aérogels, de porosité submicronique, ce matériau intégrant deux gammes de porosités différentes, dont une première gamme constituée de macropores de diamètres compris entre 10 microns et 3 mm, et une seconde gamme constituée de pores submicroniques de diamètres supérieurs à 4 nm et inférieurs à 1 μm, le volume poreux desdits pores submicroniques étant d'au moins 0.5 cm$^3$/g et la masse volumique dudit matériau isolant étant inférieure à 300 kg/m$^3$.

2. Matériau isolant thermique selon la revendication 1, **caractérisé en ce qu'**il est majoritairement inorganique.

3. Matériau isolant thermique selon l'une des revendications 1 ou 2, **caractérisé en ce qu'**il est obtenu à partir du mélange d'au moins les éléments suivants : une mousse aqueuse ou de l'eau, des particules minérales de porosité submicronique, généralement incorporées à la mousse ou à l'eau sous forme d'une dispersion/suspension, lesdites particules présentant une surface spécifique S supérieure à 5 m$^2$/g, et le cas échéant un liant organique et/ou un liant minéral, et/ou un tensioactif et/ou des renforts.

4. Matériau isolant thermique selon l'une des revendications 1 à 3, **caractérisé en ce que** les particules minérales sont à base d'oxydes de silicium et/ou de leurs dérivés, en particulier intégrant des métaux alcalino-terreux ou non, notamment ces particules sont de la silice, un silicate, et/ou une argile, et/ou les particules minérales sont à base de dolomites et/ou carbonates.

5. Matériau isolant thermique selon la revendication 4, **caractérisé en ce que** les particules minérales sont des silicates ou carbonates de métal alcalin ou de métal alcalino-terreux, de préférence choisis dans les calco-magnésiens.

6. Matériau isolant thermique selon l'une des revendications 1 à 5, **caractérisé en ce que** le volume poreux pour les pores submicroniques varie de 0.5 à 3 $cm^3$/g, et le volume poreux pour les macropores est supérieur à 1 $cm^3$/g, de préférence supérieur à 3 $cm^3$/g, et en particulier varie de 5 à 15 $cm^3$/g.

7. Matériau isolant thermique selon la revendication 3, **caractérisé en ce que** le mélange incorpore également au moins un agent porogène.

8. Matériau isolant thermique selon l'une des revendications 1 à 7, **caractérisé en ce qu'**il a une conductivité thermique inférieure à 40 mW/m.K, en particulier inférieure à 35 mW/m.K, et de préférence inférieure à 30 mW/m.K.

9. Utilisation du matériau selon l'une des revendications 1 à 8 pour l'isolation thermique de bâtiments.

10. Procédé de fabrication du matériau isolant thermique selon l'une des revendications 1 à 8, comprenant les étapes suivantes :

    - au moins une étape de préparation d'un mélange de particules minérales de surface spécifique S supérieure à 5 $m^2$/g, et possédant un volume poreux d'au moins 0.5 $cm^3$/g dans la gamme de porosité comprise entre 4 nm et 1 micron ;
    - au moins une étape de réalisation d'une mousse incluant lesdites particules;
    - au moins une étape de mise en forme, notamment par moulage, projection ou coulage de cette mousse ;
    - au moins une étape de séchage au moins partiel de la mousse ou du matériau ainsi obtenu.

11. Procédé selon la revendication 10, **caractérisé en ce que** l'on ajoute dans le mélange de particules ou dans la mousse au moins un additif tel qu'un agent porogène, un tensioactif, un liant organique ou inorganique, un agent rhéologique, un agent de surface et/ou des renforts.

12. Procédé selon l'une des revendications 10 ou 11, **caractérisé en ce qu'**il inclut après le séchage :

    - éventuellement au moins une étape de traitement thermique permettant la consolidation du matériau et /ou l'élimination le cas échéant de l'agent porogène, et/ou
    - éventuellement au moins une étape d'hydrophobation.

13. Procédé selon l'une des revendications 10 à 12, **caractérisé en ce que** la réalisation de la mousse aqueuse incluant les particules est réalisée par moussage direct, ou par incorporation du mélange de particules dans une mousse aqueuse déjà préformée.

**Patentansprüche**

1. Wärmedämmstoff, insbesondere in Form eines festen Schaums, der aus anderen mineralischen Partikeln als Aerogelen gebildet ist, mit einer Porosität im Submikrometerbereich, wobei dieses Material zwei verschiedene Porositätsbereiche beinhaltet, von denen ein erster Bereich aus Makroporen mit Durchmessern zwischen 10 Mikrometern und 3 mm besteht und ein zweiter Bereich aus Submikrometerporen mit Durchmessern von mehr als 4 nm und weniger als 1 $\mu$m besteht, wobei das Porenvolumen der Submikrometerporen mindestens 0,5 $cm^3$/g und die Dichte des Dämmstoffs weniger als 300 kg/$m^3$ beträgt.

2. Wärmedämmstoff nach Anspruch 1, **dadurch gekennzeichnet, dass** er mehrheitlich anorganisch ist.

3. Wärmedämmstoff nach einem der Ansprüche 1 oder 2, **dadurch gekennzeichnet, dass** er aus einem Gemisch mindestens der folgenden Elemente erhalten ist: ein wässriger Schaum oder Wasser, mineralische Partikel mit einer Porosität im Submikrometerbereich, die im Allgemeinen in Form einer Dispersion/Suspension in den Schaum oder in das Wasser eingearbeitet sind, wobei die Partikel eine spezifische Oberfläche S von mehr als 5 $m^2$/g aufweisen, und gegebenenfalls ein organisches Bindemittel und/oder ein mineralisches Bindemittel und/oder ein Tensid und/oder Verstärkungen.

4. Wärmedämmstoff nach einem der Ansprüche 1 bis 3, **dadurch gekennzeichnet, dass** die mineralischen Partikel auf Siliciumoxiden und/oder deren Derivaten basieren, die insbesondere Erdalkalimetalle beinhalten oder nicht, wobei diese Partikel insbesondere Siliciumdioxid, ein Silikat und/oder ein Ton sind und/oder die mineralischen Partikel auf Dolomiten und/oder Carbonaten basieren.

5. Wärmedämmstoff nach Anspruch 4, **dadurch gekennzeichnet, dass** die mineralischen Partikel Silikate oder Carbonate eines Alkalimetalls oder Erdalkalimetalls sind, die bevorzugt aus den Calcium-Magnesium-Verbindungen ausgewählt sind.

6. Wärmedämmstoff nach einem der Ansprüche 1 bis 5, **dadurch gekennzeichnet, dass** das Porenvolumen bei den Submikrometerporen von 0,5 bis 3 cm$^3$/g schwankt und das Porenvolumen bei den Makroporen größer als 1 cm$^3$/g ist, bevorzugt größer als 3 cm$^3$/g ist und insbesondere von 5 bis 15 cm$^3$/g schwankt.

7. Wärmedämmstoff nach Anspruch 3, **dadurch gekennzeichnet, dass** das Gemisch ferner mindestens einen Porenbildner beinhaltet.

8. Wärmedämmstoff nach einem der Ansprüche 1 bis 7, **dadurch gekennzeichnet, dass** er eine Wärmeleitfähigkeit von weniger als 40 mW/m.K, insbesondere weniger als 35 mW/m.K und bevorzugt weniger als 30 mW/m.K aufweist.

9. Verwendung des Stoffs nach einem der Ansprüche 1 bis 8 zur Wärmedämmung von Gebäuden.

10. Verfahren zur Herstellung des Wärmedämmstoffs nach einem der Ansprüche 1 bis 8, umfassend die folgenden Schritte:

> - mindestens einen Schritt der Vorbereitung eines Gemisches aus mineralischen Partikeln mit einer spezifischen Oberfläche S von mehr als 5 m$^2$/g und mit einem Porenvolumen von mindestens 0,5 cm$^3$/g im Porositätsbereich zwischen 4 nm und 1 Mikrometer;
> - mindestens einen Schritt der Herstellung eines Schaums, der diese Partikel enthält;
> - mindestens einen Schritt der Formgebung, insbesondere durch Formen, Spritzen oder Gießen dieses Schaums;
> - mindestens einen Schritt des zumindest partiellen Trocknens des Schaums oder des so erhaltenen Stoffs.

11. Verfahren nach Anspruch 10, **dadurch gekennzeichnet, dass** dem Partikelgemisch oder dem Schaum mindestens ein Additiv wie ein Porenbildner, ein Tensid, ein organisches oder anorganisches Bindemittel, ein Fließmittel, eine oberflächenaktive Substanz und/oder Verstärkungen zuzugeben wird.

12. Verfahren nach einem der Ansprüche 10 oder 11, **dadurch gekennzeichnet, dass** es nach dem Trocknen beinhaltet:

> - gegebenenfalls mindestens einen Wärmebehandlungsschritt, der die Verfestigung des Materials und/oder bei Bedarf die Eliminierung des Porenbildners ermöglicht, und/oder
> - gegebenenfalls mindestens einen Hydrophobierungsschritt.

13. Verfahren nach einem der Ansprüche 10 bis 12, **dadurch gekennzeichnet, dass** die Herstellung des die Partikel beinhaltenden wässrigen Schaums durch direktes Schäumen oder durch Einarbeiten des Partikelgemisches in einen bereits vorgeformten wässrigen Schaum erfolgt.

**Claims**

1. A heat-insulating material, in particular in the form of a solid foam, formed from mineral particles, other than aerogels, of submicron porosity, this material incorporating two different ranges of porosities, including a first range consisting of macropores with diameters of between 10 microns and 3 mm, and a second range consisting of submicron pores with diameters greater than 4 nm and less than 1 $\mu$m, the pore volume of said submicron pores being at least 0.5 cm$^3$/g and the mass per unit volume of said insulating material being less than 300 kg/m$^3$.

2. The heat-insulating material as claimed in claim 1, **characterized in that** it is predominantly inorganic.

3. The heat-insulating material as claimed in either of claims 1 and 2, **characterized in that** it is obtained from the mixture of at least the following elements: an aqueous foam or water, mineral particles of submicron porosity, generally incorporated into the foam or the water in the form of a dispersion/suspension, said particles having a specific surface area S of greater than 5 m$^2$/g, and, where appropriate, an organic binder and/or a mineral binder, and/or a surfactant and/or reinforcements.

4. The heat-insulating material as claimed in one of claims 1 to 3, **characterized in that** the mineral particles are based on silicon oxides and/or derivatives thereof, in particular incorporating alkaline-earth metals or other metals, these particles especially being silica, a silicate, and/or a clay, and/or the mineral particles being based on dolomites and/or carbonates.

5. The heat-insulating material as claimed in claim 4, **characterized in that** the mineral particles are silicates or carbonates of an alkali metal or of an alkaline-earth metal, preferably chosen from calco-magnesiums.

**6.** The heat-insulating material as claimed in one of claims 1 to 5, **characterized in that** the pore volume for the submicron pores ranges from 0.5 to 3 cm$^3$/g and the pore volume for the macropores is greater than 1 cm$^3$/g, preferably greater than 3 cm$^3$/g and in particular ranges from 5 to 15 cm$^3$/g.

**7.** The heat-insulating material as claimed in claim 3, **characterized in that** the mixture also incorporates at least one pore-forming agent.

**8.** The heat-insulating material as claimed in one of claims 1 to 7, **characterized in that** it has a heat conductivity of less than 40 mW/m.K, in particular less than 35 mW/m.K and preferably less than 30 mW/m.K.

**9.** Use of the material as claimed in one of claims 1 to 8 for the heat insulation of buildings.

**10.** A process for manufacturing the heat-insulating material as claimed in one of claims 1 to 8, comprising the following steps:

> - at least one step of preparing a mixture of mineral particles with a specific surface area S of greater than 5 m$^2$/g, and having a pore volume of at least 0.5 cm$^3$/g in the porosity range between 4 nm and 1 micron;
> - at least one step of preparing a foam including said particles;
> - at least one step of putting in form, especially by molding, spraying or casting this foam;
> - at least one step of at least partial drying of the foam or of the material thus obtained.

**11.** The process as claimed in claim 10, **characterized in that** at least one additive such as a pore-forming agent, a surfactant, an organic or mineral binder, a rheological agent, a surface agent and/or reinforcements is added to the mixture of particles or to the foam.

**12.** The process as claimed in either of claims 10 and 11, **characterized in that** it includes after drying:

> - optionally at least one step of heat treatment for consolidating the material and/or for removing, where appropriate, the pore-forming agent, and/or
> - optionally at least one step of hydrophobation.

**13.** The process as claimed in one of claims 10 to 12, **characterized in that** the preparation of the aqueous foam including the particles is performed by direct foaming, or by incorporating the mixture of particles into an already-preformed aqueous foam.

**EP 2 731 985 B1**

## RÉFÉRENCES CITÉES DANS LA DESCRIPTION

### Documents brevets cités dans la description

- WO 2010126792 A
- WO 9625475 A